(19) Europäisches Patentamt
European Patent Office
Office européen des brevets

(11) Publication number: **0 013 151**
**B1**

(12) **EUROPEAN PATENT SPECIFICATION**

(45) Date of publication of patent specification: **02.11.83**

(51) Int. Cl.[3]: **B 01 D 53/14**

(21) Application number: **79302994.3**

(22) Date of filing: **20.12.79**

(54) **Process for maintaining the performance of aqueous hindered amine scrubbing liquid in acid gas scrubbing.**

(30) Priority: **22.12.78 US 972500**

(43) Date of publication of application:
**09.07.80 Bulletin 80/14**

(45) Publication of the grant of the patent:
**02.11.83 Bulletin 83/44**

(84) Designated Contracting States:
**DE FR GB IT NL**

(56) References cited:
**FR - A - 2 374 071**
**GB - A - 1 449 039**

(73) Proprietor: **Exxon Research and Engineering Company**
**P.O.Box 390 180 Park Avenue**
**Florham Park New Jersey 07932 (US)**

(72) Inventor: **Say, Geoffrey Rhys**
**3020 Tall Timbers Road**
**Baton Rouge, Louisiana (US)**
Inventor: **Hays Sr., James Richard**
**9878 Chateau Drive**
**Baton Rouge, Louisiana (US)**
Inventor: **Iyengar, Jagannathan Nambi**
**443 West Main Street**
**Rockaway, New Jersey (US)**

(74) Representative: **Somers, Harold Arnold et al,**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 013 151 B1

Courier Press, Leamington Spa, England.

# Process for maintaining the performance of aqueous hindered amine scrubbing liquid in acid gas scrubbing

The present invention relates to a process for maintaining the performance of an aqueous hindered amine scrubbing liquid used in acid gas scrubbing, and more particularly, to a process for the removal of a cyclic urea reaction product in an amine gas treating process which involves an absorption and a regeneration system. Still more particularly, the invention is concerned with the selective precipitation and filtration of a cyclic urea degradation product which forms as a by-product in the feed gas scrubbing process.

It is well known in the art to treat gases and liquids, such as mixtures containing acidic gases including $CO_2$, $H_2S$, $SO_2$, $SO_3$, $CS_2$, HCN, COS and oxygen and sulfur derivatives of $C_1$—$C_4$ hydrocarbons with amine solutions to remove these acidic gases. The amine usually contacts the acidic gases and liquids as an aqueous solution containing the amine in an absorber tower with the aqueous amine solution contacting the acidic fluid countercurrently.

The acidic scrubbing processes known in the art can be generally classified into three (3) categories.

The first category is generally referred to as the aqueous amine process where relatively large amounts of amine solution are employed during the absorption. This type of process is often utilized in the manufacture of $H_2$ for ammonia production where nearly complete removal of the acid gas, such as $CO_2$ is required. It is also used in those instances where an acid gas, such as $CO_2$ occurs with other acid gases or where the partial pressure of the $CO_2$ and other gases is low.

The second category is generally referred to as the aqueous base scrubbing process or "hot potash" process. In this type of process a small level of an amine is included as an activator for the aqueous base used in the scrubbing solution. This type of process is generally used where bulk removal of an acid gas, such as $CO_2$ is desired. This process also applies to situations where the $CO_2$ and feed gas pressures are high. In such processes, useful results are achieved using aqueous potassium carbonate solutions as amine activators.

A third category is generally referred to as the non-aqueous solvents process. In this process, water is a minor constituent of the scrubbing solution and the amine is dissolved in the liquid phase containing the solvent. In this process up to 50% of amine is dissolved in the liquid phase. This type of process is utilized for specialized applications where the partial pressure of $CO_2$ is extremely high and/or where many acid gases are present, e.g., COS, $CH_3SH$, and $CS_2$.

The present invention relates to a process for the selective separation of a cyclic urea degradation product which may form as a by-product of the practice of the second category of acid scrubbing process described above, namely, the aqueous base scrubbing process or "hot potash" process in which a hindered amine is used.

Many industrial processes for removal of acid gases, such as $CO_2$, use regenerable aqueous alkali scrubbing solutions, such as an amine and potassium carbonate which are continuously circulated between an absorption zone where acid gases are absorbed and a regeneration zone where they are desorbed, usually by steam-stripping. The capital cost of these acid scrubbing processes is generally controlled by the size of the absorption and regeneration towers, the size of the reboilers for generating stripping steam, and the size of the condensers, which condense spent stripping steam so that condensate may be returned to the system to maintain proper water balance. The cost of operating such scrubbing plants is generally related to the amount of heat required for the removal of a given amount of acid gas, e.g., thermal efficiency, sometimes expressed as cubic feet of acid gas removed per pound of steam consumed. Means for reducing the costs in operating these industrial processes have focused on the use of absorbing systems or combinations of chemical absorbants which will operate more efficiently and effectively in acid gas scrubbing processes using existing equipment.

It is disclosed in U.S. Patent Nos. 4,112,050; 4,112,051 and 4,112,052 that sterically hindered amines unexpectedly improve the efficiency, effectiveness and cyclic working capacity of the acid gas scrubbing processes in all three of the above-mentioned process categories. In the case of the sterically hindered amine activated "hot potash" ("hot pot") $CO_2$ containing acid gas scrubbing process of the invention described in U.S. Patent No. 4,112,050, the process can be operated at a cyclic working capacity significantly greater than when diethanolamine or 1,6-hexanediamine is the amine activator used in a similar process. U.S. Patent No. 4,112,050 describes an acid gas scrubbing process comprising contacting an acid gas mixture with an aqueous solution comprising a basic alkali salt or metal hydroxide selected from alkali metal bicarbonates, carbonates, hydroxides, borates, phosphates and their mixtures and, as an activator for said basic salt, a sterically-hindered amine activator which may have a generic formula typically representable by:

$$R—NH—(CH_2)_m—NH_2$$

where R is a secondary or tertiary alkyl or cycloalkyl hydrocarbon having 4 to 20 carbon atoms and m is 2 to 5, thereby forming an acid gas-rich aqueous solution, and passing the said acid

gas-rich solution to a regeneration zone wherein the acid gas-rich solution is contacted with steam to remove acid gas therefrom to form a lean solution. It is postulated that the increase in cyclic capacity observed with the sterically hindered amines is due to the instability of their carbamates. In that respect, sterically hindered amines are similar to tertiary amines. Tertiary amines are not used on a commercial scale for carbon dioxide containing acid gas scrubbing due to their low rates of absorption and desorption.

N-alkyl alkylene diamines are advantageously used as sterically hindered amine activators in the "hot pot" process. A preferred sterically hindered amine used as an activator in the "hot pot" process is N-cyclohexyl-1,3-propanediamine. This amine in the presence of an amino acid is sufficiently water soluble under absorption and desorption conditions to maintain a single phase and it also has a very high absorption capacity.

Although N-cyclohexyl-1,3-propane diamine has been found to produce excellent results as an activator in the "hot pot" treating process, one drawback in processes where it has been used is that it produces a cyclic urea product when the acid treated gas is rich with $CO_2$ and also contains $H_2S$. The cyclic urea has a deleterious effect on $CO_2$ removal rates and must be removed and replaced with fresh N-cyclohexyl-1,3-propanediamine. The makeup rate for the hindered amine has a minimal effect on the process economics; however, the cyclic urea that is formed must be selectively removed in order to be able to maintain acid gas removal performance.

The invention which is disclosed herein represents an improvement to the "hot pot" amine activated gas treating process which includes the use of a hindered amine having a tendency to form cyclic ureas under $CO_2$ rich conditions in the presence of $H_2S$. This invention comprises a processing step wherein the cyclic urea can be selectively removed from the circulating solution thereby preventing any loss in acid gas removal capabilities.

The present invention provides an acid gas scrubbing process comprising contacting an acid gas mixture with an aqueous solution, preferably in countercurrent flow, in an absorption zone, said aqueous solution comprising a basic alkali salt or metal hydroxide selected from alkali metal bicarbonates, carbonates, hydroxides, borates, phosphates and their mixtures, and an activator for said basic salt comprising at least one sterically hindered amine having the generic formula:

$$R—NH—(CH_2)_m—NH_2$$

where R is a secondary or tertiary alkyl or cycloalkyl hydrocarbon having 4 to 20 carbon atoms and m is 2 to 5, thereby forming an acid gas-rich aqueous solution, and passing the said acid gas-rich solution to a regeneration zone wherein the acid gas-rich solution is contacted with steam to remove acid gas therefrom to form a lean solution, wherein there is formed a cyclic urea reaction product having the formula:

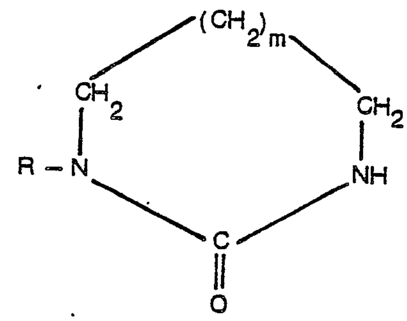

where R is a secondary or tertiary alkyl or cycloalkyl hydrocarbon having 4 to 20 carbon atoms and m is 0 to 3; characterised by cooling a portion of the lean solution exiting from said regeneration zone to a temperature in the range of from 82.3 to 26.7°C (180 to 80°F) to selectively precipitate the cyclic urea from said lean solution; and passing said lean solution containing said precipitated cyclic urea to a separation zone to remove at least a portion of the cyclic urea from said lean solution.

Preferably, the contacting of the acid gas mixture with the aqueous solution is effected at elevated temperature and pressure.

Preferably there is an acid gas loading of 28.32 to 283.2 litres (1 to 10 standardised cubic feet) per 3.785 litres (1 gallon) of said aqueous solution in the step of contacting the acid gas mixture with the said aqueous solution.

Preferably, the acid gas-rich solution resulting from the contacting of the acid gas mixture and the said aqueous solution is passed to a regeneration zone operated at temperatures in the range of from 93.3 to 121.1°C (200°F to 250°F) and gauge pressures in the range of from 6.895 to 103.425 kPa (1 to 15 psig) where it is contacted, preferably in countercurrent flow, with steam to strip acid gas impurities therefrom.

In a preferred mode of operation, the invention comprises the additional steps of:

(i) monitoring the accumulation of the cyclic urea degradation product in said separation zone, preferably a filter medium, until the pressure drop across said filter medium reaches about 172.375 kPa (25 psi) at which time said filter is segregated and a clean filter is substituted therefor;

(ii) the segregated filter is cleaned by washing with hot water having a preferred temperature of 93.3 to 115.6°C (200° to 240°F).

The cyclic urea degradation product forms primarily at rich conditions and gradually builds up in the solution causing a drop-off in acid gas removal capabilities for the circulating solution.

When there is a buildup, it becomes necessary to remove the cyclic urea degradation product so as to maintain the enhanced acid gas removal rate for the hindered amine solution. This is accomplished in the process of the present invention by providing a slip stream from the lean solution which is cooled to a preferred temperature of 54.4 to 71.1°C (130° to 160°F) and then passed over a bed of carbon or a filter medium.

The cyclic urea material was found to have unanticipated solubility properties when present in the circulating solution which contains $K_2CO_3$, $KHCO_3$, KHS, the sterically hindered amine and amino acid. The cyclic urea, which has certain physical properties similar to those of the hindered amine, was found unexpectedly to selectively come out of the solution as it was cooled from 93.3°C (200°F) to a temperature of 82.2 to 26.7°C (180 to 80°F). The desired specific temperature may be chosen on the basis of the concentration of $K_2CO_3$ in the solution. In this connection a typical temperature operating range for various $K_2CO_3$ concentrations is given in relation to Figure 2 described hereinafter.

For a scrubbing solution comprising about 30 wt.% $K_2CO_3$ and cooled to 71.1 to 54.4°C (160° to 130°F) little or none of the other components come out of the solution. If this 30 wt.% $K_2CO_3$ solution is cooled to 37.8°C (100°F) and below, then $KHCO_3$ will also precipitate from the solution and the process will no longer be selective. Similarly, for a solution comprising 25 wt.% $K_2CO_3$ and cooled to a temperature between 26.7 and 60.0°C (80° and 140°F) only cyclic urea is precipitated from the solution.

The invention disclosed herein describes the temperature region in which the cyclic urea can be selectively precipitated and removed without removing any of the other many components in the solution.

## Brief Description of the Drawings

Figure 1 is a schematic flow diagram of one embodiment of the claimed invention.

Figure 2 is a plot of the typical operating region in which cyclic urea can be selectively precipitated as a function of wt.% $K_2CO_3$ in a solution and the solution temperature.

## Detailed Description of the Invention

The acidic components which will be removed from the gaseous mixture by the scrubbing process may be $CO_2$ either alone or in combination with $H_2S$, $SO_2$, $CS_2$, HCN, COS and the oxygen and sulfur derivatives of $C_1$ to $C_4$ hydrocarbons.

The alkaline material comprising basic alkali salts or metal hydroxides will be selected from the group consisting of alkali metal bicarbonates, carbonates, hydroxides, borates, phosphates and their mixtures.

The contacting of the absorbent mixture and the acid gas may take place in any suitable contacting tower. In such processes, the gaseous mixture from which the acid gases are to be removed may be brought into intimate contact with the absorbing solution using conventional control means such as a tower packed with, for example, ceramic rings or with bubble capped plates or sieve plates or a bubble reactor. In a preferred mode of practicing the invention, the absorption step is conducted by feeding the gaseous mixture into the base of the tower while the lean absorbing solution is fed into the top. The gaseous mixture, free largely from acid gases, emerges from the top. Preferably, the temperature of the absorbing solution during the absorption step is in the range from 65.6°C (150°F) to 132.2°C (279°F) and more preferably from 65.6°C (150°F) to 121.1°C (250°F). Pressures may vary widely, acceptable gauge pressures being between 34.475 kPa (5 psig) and 13790 kPa (2000 psig). In the desorber, the gauge pressures may range from 6.895 to 103.425 kPa (1 to 15 psig). The process can be better understood by reference to the following detailed description.

Referring to the figure, sour gas is introduced via line 1 into absorption column 2 where it is contacted with the aqueous scrubbing solution introduced via line 22. The scrubbing solution is at a temperature of about 93.3°C (200°F) and has an amine concentration of from 1 to 10 wt.%, preferably 3 to 8 wt.%. As the absorbent liquid passes down the absorber column, acid gas impurities are absorbed.

The absorbent solution, enriched with acid gas impurities, passes out of absorber column 2 into line 3 which passes the enriched solution through heat exchanger 4 into line 5. Line 5 passes the enriched solution into the regenerator 6 where the acid gases are stripped from the solution and pass overhead through line 11. The lean solution formed in the regenerator column passes to the bottom of column 6 and out via line 7 which feeds the lean solution to reboiler 8 where it is boiled by steam entering via line 9, the acid vapors being passed via line 10 to the regenerator 6. The lean (essentially acid-free) solution passes out of reboiler 8 via line 12. Line 12 passes the lean solution through pump 13 into line 14. Line 14 passes the lean solution into heat exchanger 4 and some of the solution is cooled further in heat exchanger 19 with cooling water entering via line 18 to cool down the solution to the temperature range in which substantially only cyclic urea is precipitated. As used herein, the term "precipitate" is defined as particles which are separated from the solution irrespective of whether the particles would settle to the bottom of the solution or float on top. In this process the cyclic urea removed from the solution is less dense than the solution and hence will float on the surface. For a solution comprising about 30 wt.% $K_2CO_3$ the solution should be

preferably cooled to 82.82°C (180°F) to 48.9°C (120°F), as indicated in Figure 2, more preferably to 71.1 to 54.5°C (160° to 130°F), most preferably 65.6 to 57.2°C (150° to 135°F) to selectively precipitate the cyclic urea degradation product while keeping all other components in the solution. Similarly, as shown in Figure 2, a 25 wt.% $K_2CO_3$ solution should be cooled to a temperature ranging between 26.7°C and 60°C (80°F and 140°F), preferably 32.2 to 48.9°C (90° to 120°F), to selectively precipitate only the cyclic urea. Maximum cooling effect for typical $K_2CO_3$ concentrations may be obtained by operation at a temperature in the range of between 48.9 to 26.7°C (120°F to 80°F). The solution containing the cyclic urea solids is passed into line 15 which passes it to filter element 16. The cyclic urea degradation product accumulates on the filter and is thereby selectively removed from the lean solution. When the ultimate buildup of the insoluble material on the filter causes a pressure drop of, for example, about 172.375 kPa (25 psi), a secondary filter 17 is cut in to allow continued operation of the process during the cleaning of the segregated filter.

The lean solution passes out of filter 16 via line 23 and joins with some of the other lean solution in line 21 which was not cooled by exchanger 19. These two streams combine and enter the top of the absorber. The purified gas passes out of absorber 2 via line 24. Hot water having a temperature of about 110°C (230°F) is passed via line 20 into filter element 16 in order to wash the cyclic urea from the filter and to permit its effective reuse.

Description of the Preferred Embodiments

The following is a summary of several examples which describe the invention.

Example 1

A gas treating solution was prepared which had the following composition: 30 wt.% $K_2CO_3$ (with 10% as $KHCO_3$). 6.0 wt.% cyclohexyl-1,3-propane diamine, 6.1 wt.% pipecolinic acid, 56.2 wt.% water, and 1.7 wt.% cyclic urea, i.e., 1-cyclohexyl-hexahydro-2-pyrimidinone. The solution at 93.3°C (200°F) was present as a single liquid phase. This solution was then cooled at 65.6°C (150°F) and was passed over a filter element which was a cotton wound element having a nominal 0.1 mm (100 $\mu$m) size. The cyclic urea content was decreased from 1.7 wt.% to less than 1.0 wt.%. The filtration rate was 1.8925 litres/minute (0.5 gpm) and the filter size was a 7.62 cm (3") diameter cylinder, 10.16 cm (4") high with an inner opening of about 2.54 cm (1") diameter. The filter cake was analysed to be pure cyclic urea with none of the other solution components present. This example shows that the cyclic urea can be selectively removed by this process. It is not necessary to completely remove all the cyclic urea but just to be able to keep the concentration at a nominally low level even though it is constantly being produced within the process.

Example 2

The gas treating solution described in Example 1 was cooled to 54.5°C (130°F) at which point considerably more cyclic urea came out of the solution. Operation of the process at these conditions, however, produced a somewhat inoperable condition due to the plugging tendency of the resulting precipitate. In the flowing system in which the steam is being continuously filtered such a line plugging tendency as observed above made the system somewhat inoperable. Therefore, this test indicated that for this solution cooling to below 54.4°C (130°F) leads to an undesired operability problem. The solids which were filtered during the test were again found to be pure cyclic urea with none of the other components of the solution present.

Example 3

Another gas treating solution was prepared that was similar to that shown in Example 1 but which had about 30% of the $K_2CO_3$ present as $KHCO_3$. In this solution, cooling from 93.3 to 65.5°C (200°F to 150°F) again caused the cyclic urea to selectively precipitate from the solution. As the solution was further cooled to somewhat below 37.8°C (100°F), it was found that the process was no longer selective in that in addition to the cyclic urea precipitating out, $KHCO_3$ was also precipitated out. This test further shows the critical temperature range over which the cyclic urea selectively precipitates. If the temperature goes below about 37.8°C (100°F), the process is no longer selective. The filter cake in this test was found to contain substantial amounts of $KHCO_3$.

Example 4

Another gas treating solution was prepared which had a composition similar to that shown in Example 1 except that the cyclic urea content was 1.4 wt.%. This solution was cooled to 64.4°C (148°F) and was filtered using a filter arrangement as described in Example 1 but with a 0.005 mm (5 $\mu$m) element rather than the 0.1 mm (100 $\mu$m). The run was carried out at 1.8925 litres/minute (0.5 gpm) and the filter cake collected was analysed and was found to be pure cyclic urea. In this test, the run was carried out until the pressure drop across the element reached about 172.375 kPa (25 psi).

Example 5

After completion of the run described in Example 4 the filter had a pressure drop of 172.375 kPa (25 psi) due to the cyclic urea cake on the filter element. This cake was washed with 76.7°C (170°F) water and a second cycle was attempted in which case a run of only about 25% as long as the initial run

occurred. This indicated that the washing with 76.7°C (170°F) water was not an effective cleaning process. The filter was then washed with 110.0°C (230°F) water and then another cycle was attempted. In this case, the cycle length was equivalent to that of the initial cycle on the fresh filter. Three more complete cycles were run in which the filter cake was washed with 110.0°C (230°F) water after a 172.375 kPa (25 psi) pressure drop had built up due to the accumulation of the cyclic urea cake. In each case the amount of cyclic urea removed was the same as that with a new filter. These tests indicated an effective washing technique in which the water temperature criticality was demonstrated.

Example 6

Another gas treating solution was prepared comprising: 25 wt.% $K_2CO_3$ (with 20% of this present as $KHCO_3$), 6.3 wt.% cyclohexyl-1,3-propane diamine, 3 wt.% pipecolinic acid, 0.8 wt.% cyclic urea and the balance water. The solution was then cooled to about 29.4°C (85°F). The filter cake was collected, analysed, and found to be substantially pure cyclic urea.

Although the subject process has been described with reference to a specific embodiment, it will be understood that it is capable of further modification. Any variations, uses or adaptations of the invention following, in general, the principles of the invention are intended to be covered, including such departures from the present disclosure as come within known or customary practice in the art to which the invention pertains and as may be applied to the essential features hereinbefore set forth, and as fall within the scope of the invention.

**Claims**

1. An acid gas scrubbing process comprising contacting an acid gas mixture with an aqueous solution in an absorption zone, said aqueous solution comprising a basic alkali salt, or metal hydroxide selected from alkali metal bicarbonates, carbonates, hydroxides, borates, phosphates and their mixtures, and an activator for said basic salt comprising at least one sterically hindered amine having the generic formula:

$$R-NH-(CH_2)_m-NH_2$$

where R is a secondary or tertiary alkyl or cycloalkyl hydrocarbon having 4 to 20 carbon atoms and m is 2 to 5, thereby forming an acid gas-rich aqueous solution, and passing the said acid gas-rich aqueous solution to a regeneration zone wherein the acid gas-rich solution is contacted with steam to remove acid gas therefrom to form a lean solution, wherein there is formed a cyclic urea reaction product having the formula:

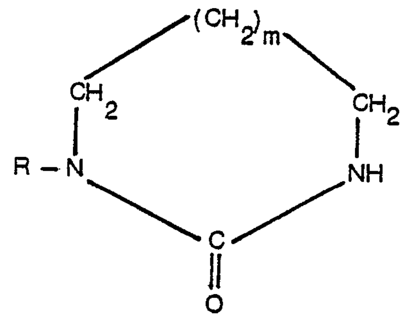

where R is a secondary or tertiary alkyl or cycloalkyl hydrocarbon having 4 to 20 carbon atoms and m is 0 to 3; characterised by cooling a portion of the lean solution exiting from said regeneration zone to a temperature in the range of from 82.3 to 26.7°C (180 to 80°F) to selectively precipitate the cyclic urea from said lean solution; and passing said lean solution containing said precipitated cyclic urea to a separation zone to remove at least a portion of the cyclic urea from said lean solution.

2. A process according to claim 1 characterised in that the said sterically hindered amine is an N-alkylalkylenediamine, preferably N-cyclohexyl-1,3-propanediamine.

3. A process according to claim 1 or claim 2 characterised in that the said lean solution exiting from said regeneration zone is cooled to a temperature in the range of from 54.5 to 71.2°C (130° to 160°F).

4. A process according to claim 1 or claim 2 characterised in that the said lean solution exiting from said regeneration zone is cooled to a temperature in the range of from 31 to 49°C (90 to 120°F).

5. A process according to any one of claims 1 to 4 characterised in that the said cyclic urea is removed by passing said lean solution through separation media comprising porous filters or activated carbon beds.

6. A process according to claim 5 characterised in that the accumulation of said cyclic urea on said filter is monitored until the pressure drop across said filter reaches about 172.375 kPa (25 psi) at which time said filter is segregated to interrupt the passage of lean solution therethrough and a second filter is substituted therefor and lean solution caused to pass through the second filter.

7. A process according to any one of claims 1 to 6 characterised in that the portion of lean solution from which cyclic urea has been separated is recirculated to the absorption zone.

8. A process according to any one of claims 1 to 7 characterised in that lean solution other than said portion thereof is recirculated back to the absorption zone.

9. A process according to any one of claims 1 to 8 characterised in that the contacting of the acid gas mixture with the aqueous solution is effected at elevated temperature and pressure.

**Revendications**

1. Procédé de lavage de gaz acides, consistant à mettre en contact un mélange de gaz acides avec une solution aqueuse dans une zone d'absorption, cette solution aqueuse comprenant un sel basique de métal alcalin ou un hydroxyde métallique choisi parmi les bicarbonates, carbonates, hydroxydes, borates, phosphates de métaux alcalins et leurs mélanges, et un activeur pour ce sel basique, comprenant au moins une amine présentant un encombrement stérique, ayant la formule générale:

$$R—NH—(CH_2)_m—NH_2$$

où R est un hydrocarbure d'alkyl ou cycloalkyl secondaire ou tertiaire ayant de 4 à 20 atomes de carbone et m vaut de 2 à 5, de façon à former une solution aqueuse riche en gaz acides, et à faire passer cette solution aqueuse riche en gaz acides dans une zone de régénération, dans laquelle la solution riche en gaz acides est mise en contact avec de la vapeur pour en éliminer les gaz acides pour former une solution pauvre, et où il se forme un produit de réaction de type urée cyclique, ayant la formule

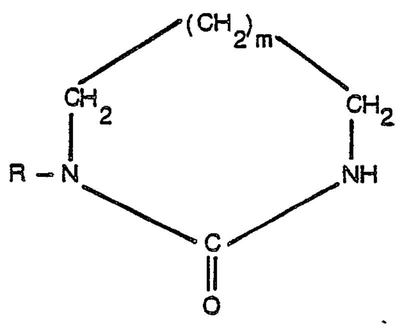

où R est un hydrocarbure d'alkyl ou cycloalkyl secondaire ou tertiaire ayant de 4 à 20 atomes de carbone et m vaut 0 à 3; caractérisé en ce qu'il consiste à refroidir une partie de la solution pauvre sortant de la zone de régénération à une température comprise entre 82,3 et 26,7°C (180 à 80°F) pour faire précipiter sélectivement l'urée cyclique à partir de la solution pauvre; et à envoyer cette solution pauvre contenant l'urée cyclique précipitée vers une zone de séparation pour éliminer de la solution pauvre au moins une partie de l'urée cyclique.

2. Procédé selon la revendication 1, caractérisé en ce que l'amine présentant un encombrement stérique est une N-alkylalkylènediamine, de préférence la N-cyclohexyl-1,3-propane-diamine.

3. Procédé selon l'une quelconque des revendications 1 ou 2, caractérisé en ce que la solution pauvre sortant de la zone de régénération est refroidie à une température comprise entre 54,5 et 71,2°C (130°F à 160°F).

4. Procédé selon l'une quelconque des revendications 1 ou 2, caractérisé en ce que la solution pauvre sortant de la zone de régénération est refroidie à une température comprise entre 31 et 49°C (90 à 120°F).

5. Procédé selon l'une quelconque des revendications 1 à 4, caractérisé en ce que l'urée cyclique est éliminée par passage de la solution pauvre à travers des milieux de séparation comprenant des filtres poreux ou des lits de charbon actif.

6. Procédé selon la revendication 5, caractérisé en ce que l'accumulation de l'urée cyclique sur le filtre est réalisée jusqu'à ce que la chute de pression à travers le filtre atteigne environ 172,375 kPa (25 psi), moment où on sépare le filtre pour interrompre le passage de la solution pauvre à travers lui, et où on le remplace par un deuxième filtre et on fait passer la solution pauvre à travers le deuxième filtre.

7. Procédé selon l'une quelconque des revendications 1 à 6, caractérisé en ce que la partie de la solution pauvre d'où a été séparée l'urée cyclique est renvoyée dans la zone d'absorption.

8. Procédé selon l'une quelconque des revendications 1 à 7, caractérisé en ce qu'une solution pauvre autre que ladite partie de cette solution est renvoyée dans la zone d'absorption.

9. Procédé selon l'une quelconque des revendications 1 à 8, caractérisé en ce que le contact du mélange de gaz acides et de la solution aqueuse est réalisé à une température et une pression élevées.

**Patentansprüche**

1. Waschverfahren für saures Gas, bei dem eine saure Gasmischung in einer Absorptionszone mit einer wässrigen Lösung kontaktiert wird, die ein basisches Alkalisalz oder ein Metallhydroxid ausgewählt aus Alkalimetallbicarbonaten, -carbonaten, -hydroxiden, -boraten, -phosphaten und deren Mischungen und einen Aktivator für das basische Salz enthält, welcher mindestens ein sterisch gehindertes Amin mit der allgemeinen Formel

$$R—NH—(CH_2)_m—NH_2$$

umfaßt, wobei R ein sekundärer oder tertiärer Alkyl- oder Cycloalkyl-Kohlenwasserstoff mit 4 bis 20 Kohlenstoffatomen ist und m 2 bis 5 ist, dadurch eine mit saurem Gas angereicherte wässrige Lösung gebildet wird und die mit saurem Gas angereicherte wässrige Lösung in eine Regenerierzone geleitet wird, in der die mit saurem Gas angereicherte Lösung zur Entfernung von saurem Gas unter Bildung einer gasarmem Lösung mit Dampf kontaktiert wird, wobei ein cyclisches Harnstoffreaktionsprodukt mit der Formel

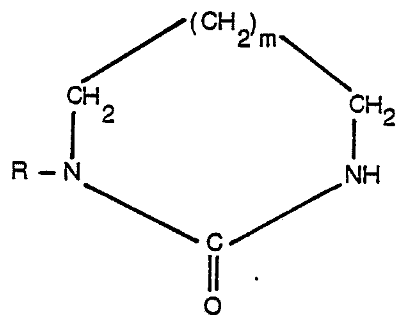

gebildet wird, in der R ein sekundärer oder tertiärer Alkyl- oder Cycloalkyl-Kohlenwasserstoff mit 4 bis 20 Kohlenstoffatomen ist und m 0 bis 3 ist, dadurch gekennzeichnet, daß ein Teil der gasarmen, aus der Regenerierzone austretenden Lösung auf eine Temperatur im Bereich von 82,3 bis 26,7°C gekühlt wird, um den cyclischen Harnstoff selektiv aus der gasarmen Lösung zu fällen, und die gasarme, den gefällten cyclischen Harnstoff enthaltende Lösung in eine Trennzone geleitet wird, um mindestens einen Teil des cyclischen Harnstoffs von der gasarmen Lösung abzutrennen.

2. Verfahren nach Anspruch 1, dadurch gekennzeichnet, daß das sterisch gehinderte Amin ein N-Alkylalkylendiamin, vorzugsweise N-Cyclohexyl-1,3-propandiamin ist.

3. Verfahren nach Anspruch 1 oder 2, dadurch gekennzeichnet, daß die gasarme, aus der Regenerierzone austretende Lösung auf eine Temperatur im Bereich von 54,5 bis 71,2°C gekühlt wird.

4. Verfahren nach Anspruch 1 oder 2, dadurch gekennzeichnet, daß die gasarme, aus der Regenerierzone austretende Lösung auf eine Temperatur im Bereich von 31 bis 49°C gekühlt wird.

5. Verfahren nach einem der Ansprüche 1 bis 4, dadurch gekennzeichnet, daß der cyclische Harnstoff entfernt wird, indem die gasarme Lösung durch Trennmedien geleitet wird, die poröse Filter oder aktivierte Kohlebetten umfassen.

6. Verfahren nach Anspruch 5, dadurch gekennzeichnet, daß die Ansammlung des cyclischen Harnstoffs auf dem Filter überwacht wird, bis der Druckverlust über dem Filter etwa 172,375 kPa erreicht, zu diesem Zeitpunkt der Filter zur Unterbrechung des Durchflusses von gasarmer Lösung ausgesondert und durch einen zweiten Filter ersetzt wird und gasarme Lösung durch den zweiten Filter geleitet wird.

7. Verfahren nach einem der Ansprüche 1 bis 6, dadurch gekennzeichnet, daß der Teil der gasarmen Lösung, aus dem cyclischer Harnstoff abgetrennt worden ist, in die Absorptionszone zurückgeführt wird.

8. Verfahren nach einem der Ansprüche 1 bis 7, dadurch gekennzeichnet, daß die gasarme Lösung, bei der es sich nicht um den von cyclischem Harnstoff befreiten Teil handelt, in die Absorptionszone zurückgeführt wird.

9. Verfahren nach einem der Ansprüche 1 bis 8, dadurch gekennzeichnet, daß das Kontaktieren der sauren Gasmischung mit der wässrigen Lösung bei erhöhter Temperatur und erhöhtem Druck erfolgt.

FIG. 1

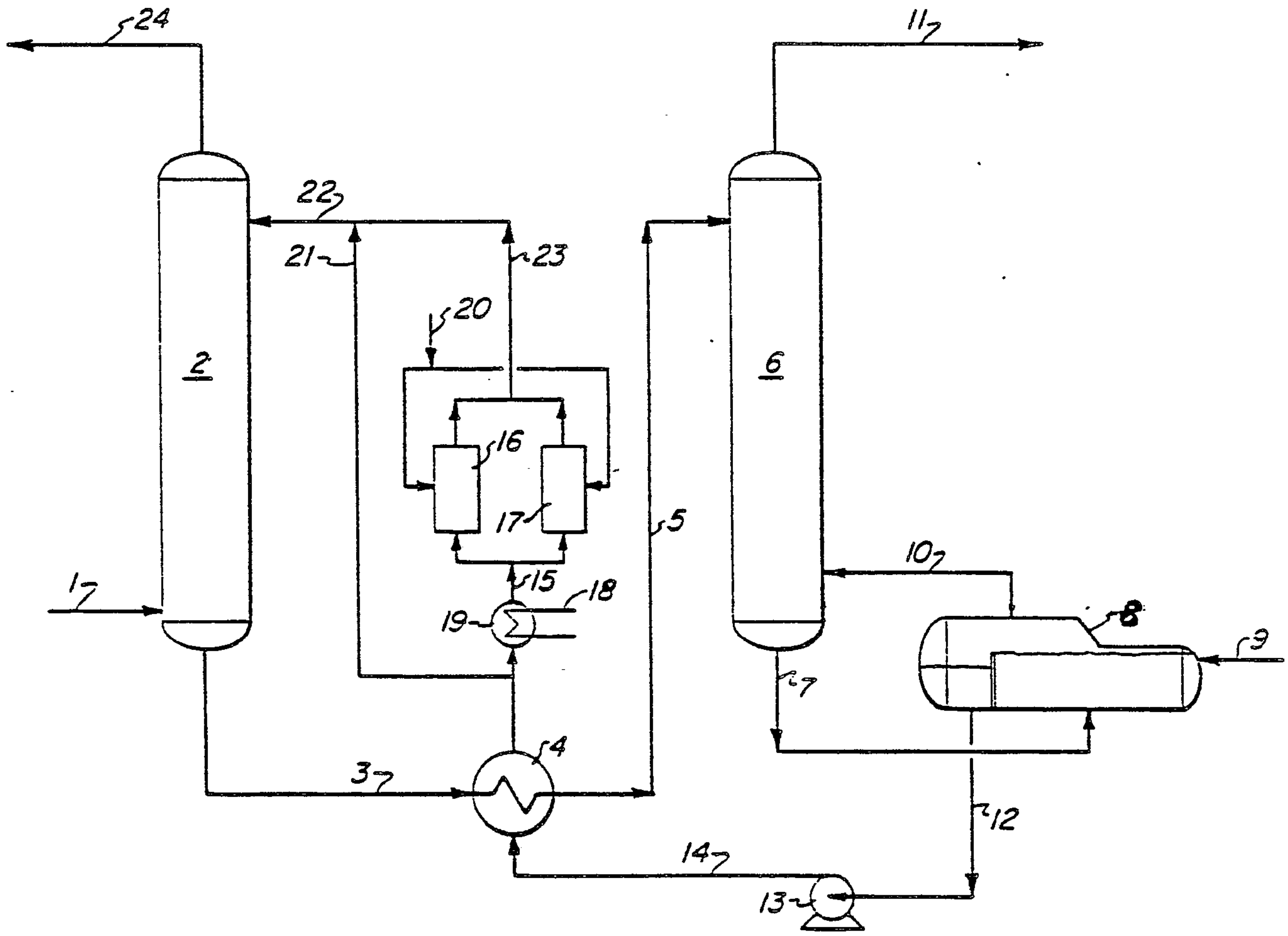

FIG. 2

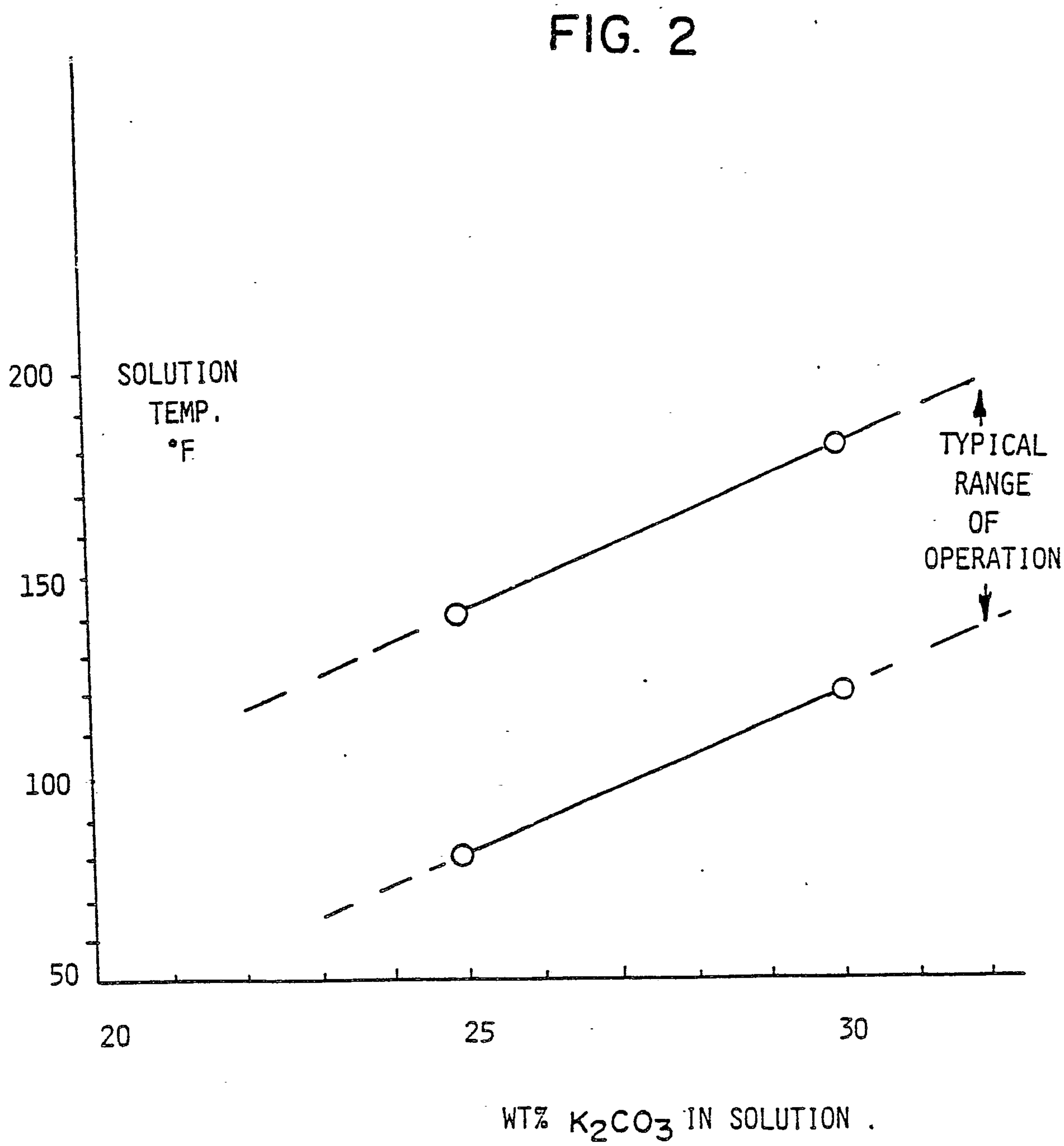
200
150
100
50
SOLUTION
TEMP.
°F
TYPICAL
RANGE
OF
OPERATION
20
25
30
WT% $K_2CO_3$ IN SOLUTION .